# EUROPÄISCHE PATENTSCHRIFT

(11) **EP 2 736 677 B1**
(45) Veröffentlichungstag und Bekanntmachung des Hinweises auf die Patenterteilung: **21.10.2015**
(21) Anmeldenummer: 12775602.1
(22) Anmeldetag: 20.07.2012
(51) Int. Cl.: B24B 39/00, B21H 7/18, B23P 9/02

(54) **FESTWALZROLLE**
HARD-ROLLING ROLLER
ROULEAU DE GALETAGE

(30) Priorität: 28.07.2011 DE 202011103888 U
(43) Veröffentlichungstag der Anmeldung: 04.06.2014
(73) Patentinhaber: Hegenscheidt-MFD GmbH & Co. KG, 41812 Erkelenz (DE)
(72) Erfinder: STEFFENS, Hans-Toni, 41812 Erkelenz (DE); ZIMMERMANN, Hans, 52538 Selfkant (DE)
(74) Vertreter: Patentanwälte Findeisen & Neumann
(86) Internationale Anmeldenummer: PCT/DE2012/000750
(87) Internationale Veröffentlichungsnummer: WO 2013/013659

(56) Entgegenhaltungen:
- DE-U1-202009 012 976
- US-A- 5 099 558
- US-B1- 6 393 885

## Beschreibung

Die Erfindung betrifft eine Festwalzrolle für ein Festwalzwerkzeug mit einem torusförmigen Grundkörper zum Festwalzen von Radien oder Einstichen, welche die Lagerzapfen an Kurbelwellen zu beiden Seiten begrenzen, und mit zwei zumindest annähernd kegelstumpfförmigen Zentralkörpern, die sich auf den beiden Seiten des Grundkörpers erheben, wobei sich auf der oberen Abschlussfläche von einem der beiden Zentralkörper ein zylindrischer Körper erhebt. Siehe DE 20 2009 012 976 U1 oder US 5 099 558 A.

Festwalzrollen haben üblicher Weise die Form eines niedrigen Kegelstumpfes. Die Basisfläche dieses Kegelstumpfes ist an ihren Rändern stark abgerundet, mitunter mit unterschiedlichen Radien, wodurch sich ein annähernd torusförmiger Körper ergibt. Festwalzrollen dieser Art sind beispielsweise bekannt aus DE 102 30 526 A1, vgl. Fig. 2. Aber auch in WO 2005/023488 A1 sind Festwalzrollen der genannten Art gezeigt, vgl. Fig.10 bis Fig.12. Die genannten Festwalzrollen werden austauschbar in Festwalzwerkzeugen verwendet und sind in Rollenkäfigen lose drehbar geführt. Ein Rollenkäfig der genannten Art ist beispielsweise bekannt aus DE 100 42 425 B4. Bei der Verwendung der vorgenannten Festwalzrollen in Festwalzwerkzeugen kann es vorkommen, dass die Festwalzrollen in umgekehrter Lage zwischen den Rollenkäfigen eingespannt werden. Die Folgen sind ein vorzeitiger Verschleiß des Rollenkäfigs, der Festwalzrolle und eine fehlerhaft bearbeitete Kurbelwelle.

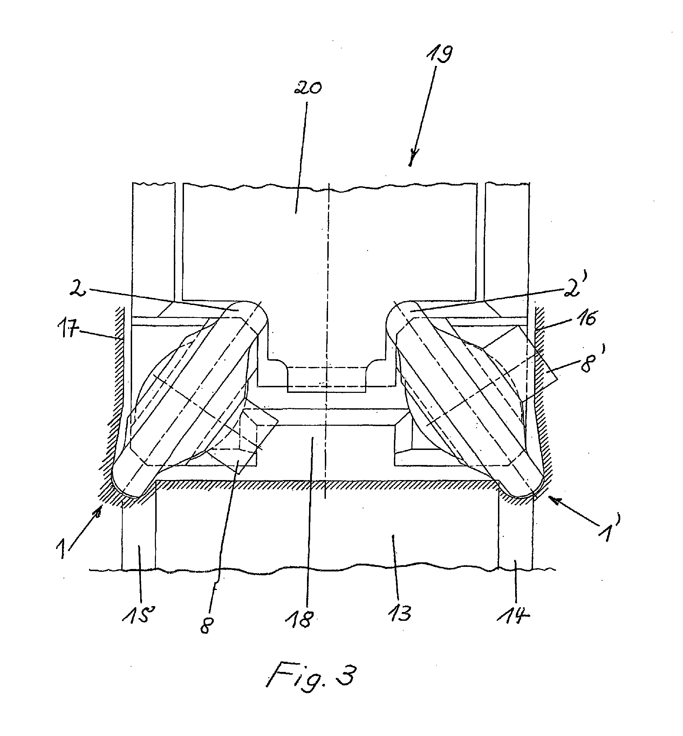

Aus US 6,393,885 B1 sind auch Festwalzrollen bekannt, die neben Festwalzrollen der genannten Art, vgl. Fig. 3, Fig. 5a und Fig. 5b, davon unterschiedliche Formen aufweisen. Derartige Festwalzrollen haben einen torusförmigen Grundkörper zum Festwalzen von Radien oder Einstichen, welche die Lagerzapfen an Kurbelwellen zu beiden Seiten begrenzen, und zwei zumindest annähernd kegelstumpfförmige Zentralkörper, die sich auf den beiden Seiten des Grundkörpers erheben, vgl. Fig. 6 bis Fig. 11. Allerdings sind die bekannten Festwalzrollen nicht dazu vorgesehen, einen unvorschriftsmäßigen Einbau zu vermeiden. Die Formgebung resultiert vielmehr daher, dass man für den torusförmigen Grundkörper, welcher ja die Hauptarbeit beim Festwalzen zu leisten hat, eine verbreiterte Abstützfläche an der Führungsrolle geschaffen hat. Damit wirkt die Festwalzkraft nicht mehr unmittelbar über den Grundkörper auf die Festwalzrolle, sondern über die sich zu beiden Seiten des Grundkörpers erhebenden, zumindest annähernd kegelstumpfförmigen Zentralkörper, vgl. Fig.6.

Daraus ergibt sich die Aufgabe für die vorliegende Erfindung, eine Festwalzrolle so auszugestalten, dass sie immer in der vorgeschriebenen, d.h., richtigen Einbaulage in das Festwalzwerkzeug montiert wird.

Erfindungsgemäß wird diese Aufgabe durch eine Festwalzrolle gemäß Patentanspruch 1 gelöst.

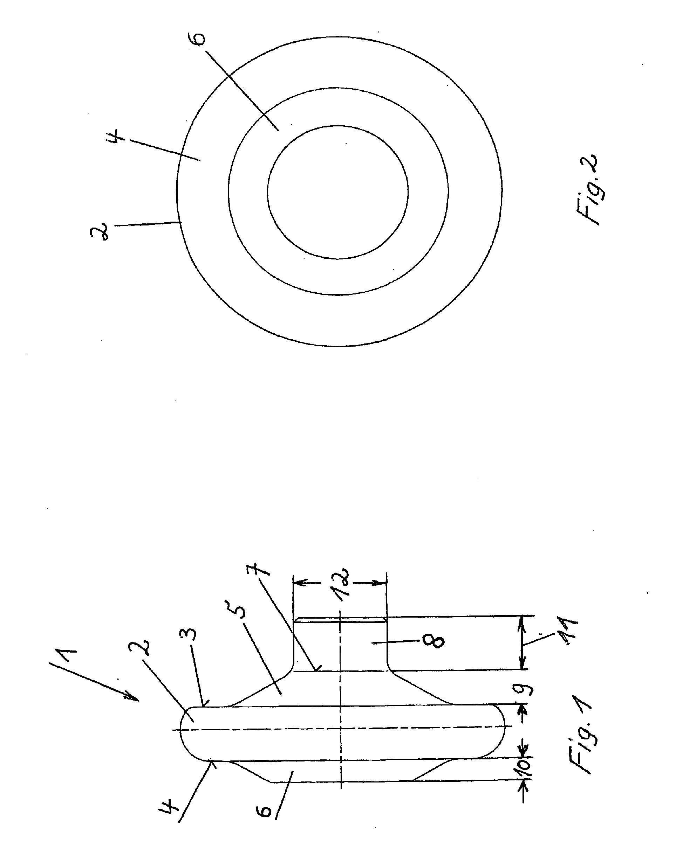

Nachfolgend wird die Erfindung an einem Ausführungsbeispiel näher beschrieben. Es zeigen in jeweils vergrößertem Maßstab die
- Fig. 1: eine Festwalzrolle in der Seitenansicht
- Fig. 2: die Festwalzrolle der Fig. 1 in der Vorderansicht
- Fig. 3: unterschiedliche Einbaulagen der Festwalzrolle der Fig. 1

Die Festwalzrolle 1 hat einen torusförmigen Grundkörper 2 zum Festwalzen von Radien oder Einstichen 14, 15, welche die Lagerzapfen 13 an Kurbelwellen (nicht gezeigt) zu beiden Seiten begrenzen. Auf beiden Seiten 3 und 4 des Grundkörpers 2 erheben sich kegelstumpfförmige Zentralkörper 5 und 6. Auf der oberen Abschlussfläche 7 des einen Zentralkörpers 5 erhebt sich ein zylindrischer Körper 8. Beispielsweise haben die beiden Zentralkörper 5 und 6 unterschiedliche Höhen 9 und 10. Diese Höhenunterschiede sind aber nicht zwingend erforderlich, so dass die beiden Höhen 9 und 10 durchaus auch gleich sein können. Ja, die Höhe des einen Zentralkörpers 6, der den zylindrischen Körper 8 nicht trägt, kann auch Null sein.

Der zylindrische Körper 8 hat seinerseits eine Höhe 11, die mindestens genauso hoch ist wie die Höhe 9 des Zentralkörpers 5. Vorzugsweise aber ist die Höhe 11 des zylindrischen Körpers 8 größer als die Höhe 9 des den zylindrischen Körper 8 tragenden Zentralkörpers 5. Der Durchmesser 12 des zylindrischen Körpers 8 entspricht der oberen Abschlussfläche 7 des Zentralkörpers 5. Nicht zu vergessen, die gesamte Festwalzrolle 1 mit ihrem Grundkörper 2, den Zentralkörpern 5, 6 und dem zylindrischen Körper 8 ist einstückig ausgebildet. Die Festwalzrolle 1 besteht aus einem hochfesten Material.

In Fig. 3 sind unterschiedliche Einbaulagen der Festwalzrolle 1 dargestellt. Zunächst einmal ist ein beliebiger Lagerzapfen 13 einer Kurbelwelle gezeigt. Der Lagerzapfen 13 wird zu beiden Seiten von Einstichen 14 und 15 begrenzt, woran sich die Kurbelwangen 16 und 17 anschließen.

Auf der linken Hälfte der Abbildung der Fig. 3 ist eine Festwalzrolle 1 in korrekter Einbaulage dargestellt. Auf der rechten Hälfte der Abbildung der Fig. 3 ist eine Festwalzrolle 1' in falscher Einbaulage dargestellt. Bei der korrekten Einbaulage der Festwalzrolle 1 findet der zylindrische Körper 8 ausreichend Platz zwischen zwei benachbarten Rollenkäfigen 18. Bei einer Einbaulage entsprechend der rechten Hälfte der Abbildung der Fig. 3, erkennt man, dass eine falsch eingebaute Festwalzrolle 1' mit ihrem zylindrischen Körper 8' in die Kurbelwange 16 hineinragen würde. Das Einbringen eines Festwalzwerkzeugs 19 zwischen die Kurbelwangen 16 und 17 wäre demnach von vornherein nicht möglich. Der Vollständigkeit halber sei noch erwähnt, dass sich die beiden Festwalzrollen 1 und 1' mit ihren Grundkörpern 2 bzw. 2' innerhalb des Festwalzwerkzeugs 19 auf einer Führungsrolle 20 abstützen, wie das an sich bekannt ist.

### Bezugszeichenliste

- 1,1': Festwalzrolle
- 2: Grundkörper
- 3: Seite
- 4: Seite
- 5: Zentralkörper
- 6: Zentralkörper
- 7: obere Abschlussfläche
- 8,8': zylindrischer Körper
- 9: Höhe
- 10: Höhe
- 11: Höhe
- 12: Durchmesser
- 13: Lagerzapfen
- 14: Einstich
- 15: Einstich
- 16: Kurbelwange
- 17: Kurbelwange
- 18: Rollenkäfig
- 19: Festwalzwerkzeug
- 20: Führungsrolle

## Patentansprüche

1. Festwalzrolle (1, 1') für ein Festwalzwerkzeug (19) mit einem torusförmigen Grundkörper (2, 2') zum Festwalzen von Radien oder Einstichen (14, 15), welche die Lagerzapfen (13) an Kurbelwellen zu beiden Seiten begrenzen, und mit zwei zumindest annähernd kegelstumpfförmigen Zentralkörpern (5, 6), die sich auf den beiden Seiten (3, 4) des Grundkörpers (2, 2') erheben, wobei sich auf der oberen Abschlussfläche (7) von einem der beiden Zentralkörper (5, 6) ein zylindrischer Körper (8, 8') erhebt, **dadurch gekennzeichnet, dass** die Abmessungen der Höhe (11) und des Durchmessers (12) des zylindrischen Körpers (8, 8') so festgelegt sind, dass das Festwalzwerkzeug (19) bei einer falschen Einbaulage von einer Festwalzrolle (1, 1') mit einer Kurbelwange (16, 17) der Kurbelwelle kollidiert.

2. Festwalzrolle nach Anspruch 1, **dadurch gekennzeichnet,**
**dass** die beiden Zentralkörper (5, 6) unterschiedliche Höhen (9, 10) haben.

3. Festwalzrolle nach Anspruch 2, **dadurch gekennzeichnet,**
**dass** der eine Zentralkörper (6), die den zylindrischen Körper (8, 8') nicht trägt, die Höhe (10) Null hat.

4. Festwalzrolle nach Anspruch 2, **dadurch gekennzeichnet,**
**dass** sich der zylindrische Körper (8) auf der oberen Abschlussfläche (7) des Zentralkörpers (5) mit der größeren Höhe (9) erhebt.

5. Festwalzrolle nach Anspruch 1, **dadurch gekennzeichnet,**
**dass** der zylindrische Körper (8, 8') denselben Durchmesser (12) hat, wie die obere Anschlussfläche (7) des zugehörigen Zentralkörpers (5).

6. Festwalzrolle nach Anspruch 1, **dadurch gekennzeichnet,**
**dass** der zylindrische Körper (8, 8') mindestens dieselbe Höhe (11) hat, wie der zugehörige Zentralkörper (5).

## Claims

1. Work rollers (1, 1') for a deep rolling tool (19) with a torus-shaped base body (2, 2') for deep rolling of radiuses or recesses (14, 15) which limit the bearing trunnion (13) on crankshafts on both sides and two at least approximately truncated cone-shaped central bodies (5, 6) rising on the two sides of (3, 4) of the base body (2, 2'), wherein a cylindrical body (8, 8') rises on the upper end surface (7) of one of the two central bodies (5, 6), **characterized in that** the dimensions of the height (11) and the diameter (12) of the cylindrical body (8, 8') are set so that the deep rolling tool (19) collides with a crank web (16, 17) of the crankshaft in the case of incorrect mounting of a work roller (1, 1')

2. Work roller according to claim 1, **characterized in that** the two central bodies (5, 6) have different heights (9, 10).

3. Work roller according to claim 2, **characterized in that** the height (10) of the central body (6) that does not support the cylindrical body (8, 8') is zero.

4. Work roller according to claim 2, **characterized in that** the cylindrical body (8) on the upper end surface (7) of the central body (5) having the larger height (9) rises.

5. Work roller according to claim 1, **characterized in that** the cylindrical body (8, 8') has the same diameter (12) as the upper contact surface (7) of the corresponding central body (5).

6. Work roller according to claim 1, **characterized in that** the cylindrical body (8, 8') has at least the same height (11) as the corresponding central body (5).

## Revendications

1. Galet (1, 1') pour outil de galetage de vilebrequin (19) avec un corps de base toroïdal (2, 2') destiné au galetage des rayons et entailles (14, 15) qui délimitent, de chaque côté, les tourillons (13) de vilebrequins, et avec deux corps centraux au moins approximativement tronconiques (5, 6) qui se dressent de chaque côté (3, 4) du corps de base (2, 2') et sur cette structure, un corps cylindrique (8, 8') se dresse sur la surface terminale supérieure (7) de l'un des deux corps centraux (5, 6), **caractérisé en ce que** les dimensions en hauteur (11) et diamètre (12) du corps cylindrique sont définies de telle sorte que l'outil de galetage de vilebrequin (19) entre en collision avec une joue de manivelle (16, 17) de vilebrequin lorsqu'un galet (1, 1') est monté de manière incorrecte.

2. Galet selon la revendication 1, **caractérisé en ce que** les deux corps centraux (5, 6) présentent des hauteurs différentes (9, 10).

3. Galet selon la revendication 2, **caractérisé en ce que** l'un des deux corps centraux (6) qui ne porte pas le corps cylindrique (8, 8') a la hauteur (10) zéro.

4. Galet selon la revendication 2, **caractérisé en ce que** le corps cylindrique (8) se dresse sur la surface terminale supérieure (7) du corps central (5) avec la hauteur (9) la plus élevée.

5. Galet selon la revendication 1, **caractérisé en ce que** le corps cylindrique (8, 8') présente le même diamètre (12) que la surface terminale supérieure (7) du corps central correspondant (5).

6. Galet selon la revendication 1, **caractérisé en ce que** le corps cylindrique (8, 8') est de hauteur (11) au moins égale à celle du corps central correspondant (5).
